# EUROPEAN PATENT SPECIFICATION

(11) **EP 2 850 379 B1**
(45) Date of publication and mention of the grant of the patent: **29.08.2018**
(21) Application number: 12726227.7
(22) Date of filing: 16.05.2012
(51) Int. Cl.: B23P 15/26, F22B 1/18, F22B 37/10, F22G 7/12, F27D 7/06, F28D 7/08, F28D 21/00, F28F 19/02, F28F 19/06

(54) **WASTE TO ENERGY INCINERATION PLANT COMPRISING A FLUID HEATING HTEAT EXCHANGER HAVING ENHANCED CORROSION RESISTANCE**
MÜLLVERBRENNUNGSANLAGE UMFASSEND EINEN WÄRMETAUSCHER MIT FLÜSSIGKEITSERWÄRMUNG MIT VERBESSERN KORROSIONSSCHUTZ
INSTALLATION D'INCINÉRATION DE DÉCHETS EN ÉNERGIE COMPRENANT UN ÉCHANGEUR DE CHALEUR CHAUFFANT UN FLUIDE AYANT UNE RÉSISTANCE À LA CORROSION AMÉLIORÉE

(43) Date of publication of application: 25.03.2015
(73) Proprietor: Babcock & Wilcox Vølund A/S, 6705 Esbjerg Ø (DK)
(72) Inventor: MIKKELSEN, Lars, DK-2605 Brøndby (DK)
(74) Representative: Budde Schou A/S
(86) International application number: PCT/IB2012/052479
(87) International publication number: WO 2013/171547

(56) References cited:
- EP-A1- 1 164 330
- WO-A2-2007/075634
- US-A- 2 719 354
- US-A- 4 033 297
- US-A1- 2004 023 180
- US-A1- 2010 038 061
- US-A1- 2010 075 055
- US-A1- 2010 199 678

## Description

The present invention relates to a heat exchanger for heating a fluid in an incineration plant. The heat exchanger comprises at least one heat exchanger component having an enhanced corrosion resistance due to a scale provided on the heat exchanger component.

Heat exchangers are known in the field of incineration processes for transferring heat from flue gases to fluids for heating the fluids. One use of heat exchangers is for the heating of saturated steam from a boiler for converting the saturated steam into dry (also called superheated) steam more useable for example in power generation processes. Dry steam is for example used for driving steam turbines in power plants.

A heat exchanger typically includes a large number of heat exchanger components, each heat exchanger component having a wall with a first side in contact with a fluid to be heated and a second side in contact with a heating medium, which in an incineration process typically is flue gas generated by the incineration process. The heat exchanger components may be plates, as in a plate heat exchanger, but may alternatively be shaped as tubes, the inner and outer side of the tube wall defining the first and second side of the heat exchanger component. For producing superheated steam in an incineration plant for producing power the heat exchanger typically comprises a plurality of individual heat exchanger components in the shape of tubes, also called superheater tubes, through which the steam sequentially passes. The heat exchanger is placed in the path of the flue gasses so that the heat exchanger components are heated by the flue gas whereby heat is passed through the wall of the heat exchanger components to heat the steam within.

Different incineration processes burn different fuels. Common incineration plants for generating power burn waste. The waste may be household waste and/or other types of waste such as industrial waste etc. Such an incineration plant is also called a waste to energy incineration plant.

A problem related to the nature of the waste burnt in the incineration plant is that the flue gas, and/or the hot ashes entrained in the flue gas, to a lesser or larger extent depending on the exact nature of the waste being burnt, comprises corrosive compounds such as chlorine. The hot ashes entrained in the flue gasses condense onto the comparatively cooler surfaces of the heat exchanger, especially the heat exchanger components or super heater tubes, and form a sticky coating thereon. Chlorine present in this coating is highly corrosive and causes severe corrosion of the metal material of the heat exchanger components or superheater tubes.

The extent of corrosion is dependent on the temperature of the heat exchanger components. When superheating steam, the temperature of the heat exchanger components, through heat transfer between the steam and the heat exchanger component, is typically 30-50°C higher than that of the steam. Higher temperature of the steam speeds up the corrosion process, thus, in order to ensure a useful life of the heat exchanger components the temperature of the steam to be superheated has to be limited. This however severely limits the efficiency of the incineration plant, particular as regards power generation where the efficiency of a steam turbine is dependent on the temperature of the steam.

Where tubes of inexpensive steel, containing mostly Fe (iron), are used as heat exchanger components for superheating steam, the maximum steam temperature is approximately 400°C if excessive corrosion and an acceptable service life is to be achieved.

Approaches for allowing the steam temperature to be increase include providing tubes of inexpensive steel coated with more expensive alloys such as Inconel 625. Inconel 625 is a nickel based alloy forming a scale of chromium oxide on its surface when subjected to heat and corrosion. With this approach a steam temperature of approximately 440°C is possible with the same speed of corrosion and service life as that possible using the tubes of inexpensive steel at 400°C.

However, still higher steam temperatures are desired in order to maximize the efficiency of incineration plants.

It is known from other technical fields to form thermal barriers comprising α-Al₂O₃, see for example EP1908857A2, however a thermal barrier prevents heat transfer and is thus not useable for protecting a heat exchanger component from corrosion. It is further known from JP4028914A to form a fire grate comprising α-Al₂O₃. A fire grate is however watercooled and thus only subjected to low temperatures when compared to the steam temperature in heat exchanger for superheating steam.

Further documents related to coating or barrier layers include EP2143819A1 WO2011100019A1, EP1944551A1, EP659709A1, US5118647A, US2010/199678 A1, US2010/0038061 and US2010/0075055. In EP 1 164 330 is disclosed a superheater tube comprising nickel in order to reduce corrosion. According to EP 1 164 330 a higher efficiency, and lower corrosion is achieved by reheating the steam leaving the first turbine by using steam A' from the steam drum. This gives a higher efficiency and a lower steam and pipe temperature.
US 2004/0023180 A1 discloses a regenerative burner used for melting and heat processing of steel, aluminium or glass. After combustion, heat of the exhaust gas is recovered as preheated air having a high temperature. The preheated air is used for firing. The regenerative burner includes one combustion room and two fuel supply inlets each forming a respective burner. Each fuel supply inlet is associated with a honeycomb regenerator which in an embodiment comprises alumina as a main ingredient and not greater than 2 weight % of impurities. By switching the direction of gas to be heated and exhaust gas, the honeycomb regenerators may alternatingly take up heat from the exhaust gas and heat up intake air for the burners.
It is thus an object of the present invention to provide a heat exchanger having enhanced corrosion resistance.
It is a further object of the present invention to provide a heat exchanger for increasing the efficiency of an incineration plant producing superheated steam.

It is a yet a further object of the present invention to provide a method for forming a scale for protecting a heat exchanger component against corrosion caused by corrosive compounds entrained or comprised by a flue gas.
At least one of the above objects, or at least one of further objects which will be evident from the below description, are according to a first aspect of the present invention achieved by the heat exchanger according to claim 1.
α-Al₂O₃, also called alpha-alumina, is an aluminium oxide which is highly corrosion resistant. Thus the protective oxide has the effect of increasing the corrosion resistance of the heat exchanger. As the corrosion resistance is increased the fluid can be heated at higher temperatures, thus allowing the efficiency of heating the fluid to be increased while still maintaining an acceptable service life of the heat exchanger.
The fluid may be any fluid suitable for being heated. Typically the fluid is water or steam. For a fluid such as steam the heat exchanger according to the first aspect of the present invention may be used with steam temperatures of above at least 480°C with a service life of at least 5 years. It is further contemplated that steam temperatures of up to 600°C can be used with at least 5 years of service life.
The incineration plant may incinerate fuels such as coal, other fossil fuels, biomass, demolition wood chips, refuse derived fuels, or waste. In the context of the present invention the term flue gas is to be understood as also comprising substances and particles generated by the incineration of a fuel. The flue gas may have a temperature of up to 1100°C to 1200°C where the flue gas is generated, i.e. where the incineration takes place.

Preferably the heat exchanger component is made of metal as metal has a high heat conductivity and is easily fabricated. The corrosion is typically heat corrosion.
A preferred embodiment of the first aspect of present invention is defined in dependent claim 2. Preferably the steam is saturated as the heating of saturated steam takes place at high temperatures at which the enhanced corrosion resistance of the heat exchanger according to the first aspect of the present invention is useful.

In embodiments of the waste to energy incineration plant wherein the fluid is steam and the heat exchanger is a superheater the at least one heat exchanger component is preferably a tube, also called a superheater tube. In the main embodiment of the first aspect of present invention, a scale is generally understood to be an oxide layer. The scale is up to 10 µm thick and comprises predominantly α-Al₂O₃. More preferably the scale comprises substantially only α-Al₂O₃. This is advantageous as it increases the corrosion resistance of the scale. The scale is preferably dense.

When the heat exchanger component is a superheater tube the superheater tube may typically have a diameter of 0.5 inches to 3 inches, corresponding to 12 to 77 mm. This heat exchanger component may for example be a tube or a plate Still in the main embodiment of the first aspect of the present invention the material costs of the heat exchanger component may be lessened since the base material can be a simple inexpensive corrosion liable steel whereas only the comparatively thinner coating need be of the precursor material. The coating need only have a thickness sufficient to allow forming of the scale and to avoid aluminium depletion in the alloy during operation.
This heat exchanger component may for example be a tube or a plate. By the preferred embodiment of the first aspect of the present invention as defined in dependent claim 3 a simple process is provided which may be used both for fabricating new heat exchange components and for retro-fitting existing heat exchanger components with the precursor material to increase the corrosion resistance of the existing heat exchanger component.
Welding is an example of applying the precursor material, but other methods known in the field may also be utilized for applying the precursor material. When welding, the coating may be from 1 mm to 20 mm thick, as defined in dependent claim 4. By an embodiment not according to the present invention the material costs to be lessened since the inner tube can be made a simple inexpensive corrosion liable steel whereas only the outer tube need be of the precursor material. Further the assembly of the inner tube with the outer tube may be made rapidly or automatically.

By an embodiment not according to the present invention a rational and effective way of providing a heat exchanger component is provided.

In this embodiment of the heat exchanger component comprising a inner tube and an outer tube the outer tube is extruded onto the inner tube.
A preferred embodiment of the first aspect of present invention is defined in dependent claim 5. Possible precursor materials should be an alloy having a minimum of 4-5 wt.% aluminium content. One exemplary precursor material is Haynes 214 alloy. Further exemplary precursor materials include the alloys in table 1.

**Table 1: Constitution of exemplary alloys**

| Alloy | C | Al | Cr | Ni | Co | Fe | Mo | W | Others |
|---|---|---|---|---|---|---|---|---|---|
| IN 713C | 0.12 | 6 | 12.5 | Bal | - | - | 4.2 | - | 0.8Ti, 2Cb, 0.012B, 0.10Zr |
| IN 713LC | 0.05 | 6 | 12.0 | Bal | - | - | 4.5 | - | 0.6Ti, 2Cb, 0.1Zr, 0.01B |
| B-1900 | 0.1 | 6 | 8.0 | Bal | 10.0 | - | 6.0 | - | 1.0Ti, 4.0Ta, 0.1Zr, 0.015B |
| IN 100 | 0.18 | 6 | 10.0 | Bal | 15.0 | - | 3.0 | - | 1.0Ti, 4.0Ta, 0.1Zr, 0.015B |
| IN162 | 0.12 | 6.5 | 10.0 | Bal | - | - | 4.0 | 2.0 | 1.0Ti, 1.0Cb, 2.0Ta, 0.1Zr, 0.02B |
| IN 713 | 0.18 | 5.5 | 9.5 | Bal | 10.0 | - | 2.5 | - | 4.6Ti, 0.06Zr, 0.015B, 1.0V |
| M 21 | 0.13 | 6 | 5.7 | Bal | - | - | 2.0 | 11.0 | 0.12Zr, 1.5Cb, 0.02B |
| M 22 | 0.13 | 6.3 | 5.7 | Bal | - | - | 2.0 | 11.0 | 3Ta, 0.6Zr |
| MAR-M 200 | 0.15 | 5 | 9.0 | Bal | 10.0 | 1.0 | - | 12.5 | 2Ti, 0.05Zr, 0.015B, 1.0Cb |
| MAR-M 246 | 0.15 | 5.5 | 9.0 | Bal | 10.0 | - | 2.5 | 10.0 | 1.5Ti, 1.5Ta, 0.05Zr, 0.015B |
| RENE 100 | 0.16 | 5.5 | 9.5 | Bal | 15.0 | - | 3.0 | - | 4.2Ti, 0.006Zr, 0.015B |
| TAZ-8A | 0.12 | 6 | 6.0 | Bal | - | - | 4.0 | 4.0 | 8Ta, 1Zr, 2.5Cb, 0.004B |
| TAZ-8B (DS) | 0.12 | 6 | 6.0 | Bal | 5.0 | - | 4.0 | 4.0 | 8Ta, 1Zr, 1.5Cb, 0.004B |

A preferred embodiment of the first aspect of present invention is defined in dependent claim 6. The incineration plant may be a waste to energy incineration plant generating both heat for use in for example area heating and steam for electrical power generation. The waste may be household waste or industrial waste, preferably the waste is household waste or light industrial waste.
The α-Al₂O₃ is resistant to corrosive compounds such as S, O₂, H₂O, Cl₂, N₂, CO/CO₂ etc. Other corrosive compounds which may form in an incineration plant include Na, Ca, Cu, K, Cl, S, Cr, Pb, Zn, Fe, Sn and Al.

By the preferred embodiment of the first aspect of the present invention as defined in dependent claim 7 the heat exchanging capacity of the heat exchanger is increased. The heat exchanger is preferably a superheater comprising typically 150 to 300 superheater tubes.

By the preferred embodiment of the first aspect of the present invention as defined in dependent claim 8 a heat exchanger component which is easy to form and which is suitable for heating a liquid in an incineration plant is provided. Further a tube is suitable where the liquid is pressurized, such as for example superheated steam. Where the heat exchanger is a superheater and the heat exchanger component is a superheater tube, the superheater tube typically up to 6 m long.
At least one of the above mentioned and further objects are moreover achieved by a second aspect of the present invention pertaining to a method of forming a scale for protecting a heat exchanger component against corrosion caused by corrosive compounds entrained or comprised by a flue gas according to claim 9. By oxidizing the heat exchanger component at a temperature, atmosphere and for a time adapted to form a scale on the precursor material, the scale comprising predominantly α-Al₂O₃, an even and complete scale is provided on the heat exchanger component providing a effective protection of the heat exchanger component.
The temperature, atmosphere and time should be adapted such that a dense scale is formed. The scale formed during the oxidation step should have a thickness of 0.1 µm to 2 µm. The time needed will depend on the exact precursor material used.
The atmosphere should have a low partial pressure of oxygen, pO₂. The pO₂ should be below 10⁻⁸ atm, more preferably below 10⁻¹¹ atm.
In a preferred embodiment of the method according to the second aspect of the present invention the method further comprises an additional step of assembling the oxidized heat exchanger component into a heat exchanger.
In an alternative embodiment of the method according to the second aspect of the present invention the method further comprises an additional step of assembling the heat exchanger component into a heat exchanger prior to the heat exchanger component is oxidized.
A preferred embodiment of the first aspect of present invention is defined in dependent claim 10. The temperature has to be adapted so that α-Al₂O₃, as opposed to other types of aluminium oxides, is formed. If the temperature is too low, α-Al₂O₃ will not form.

By the preferred embodiment of the first aspect of the present invention as defined in dependent claim 11 a suitable atmosphere for the oxidation step for most precursor materials is provided.

By the preferred embodiment of the first aspect of the present invention as defined in dependent claim 12 is a suitable time for the oxidation step for most precursor materials is provided.
The invention and its many advantages will be described in more detail below with reference to the accompanying schematic drawings, which for the purpose of illustration show some non-limiting embodiments, and in which
Fig. 1 shows a partial overview of a waste to energy incineration plant provided with a heat exchanger according to the first aspect of the present invention,
Fig. 2 shows, in side view, heat exchanger components, in the form of superheater tubes, of the heat exchanger according to the first aspect of the present invention, and
Fig. 3 shows, in partial cutaway side view, first second and third embodiments of heat exchanger components, in the form of superheater tubes, of the first second and third embodiments of the heat exchanger according to the first aspect of the present invention.

In the below description, one or more subscript roman numerals added to a reference number indicates that the element referred to is a further one of the element designated the un-subscripted reference number.
Further, A superscript roman numeral added to a reference number indicates that the element referred to has the same or similar function as the element designated the un-superscripted reference number, however, differing in structure.
When further embodiments of the invention are shown in the figures, the elements which are new, in relation to earlier shown embodiments, have new reference numbers, while elements previously shown are referenced as stated above. Elements which are identical in the different embodiments have been given the same reference numerals and no further explanations of these elements will be given.

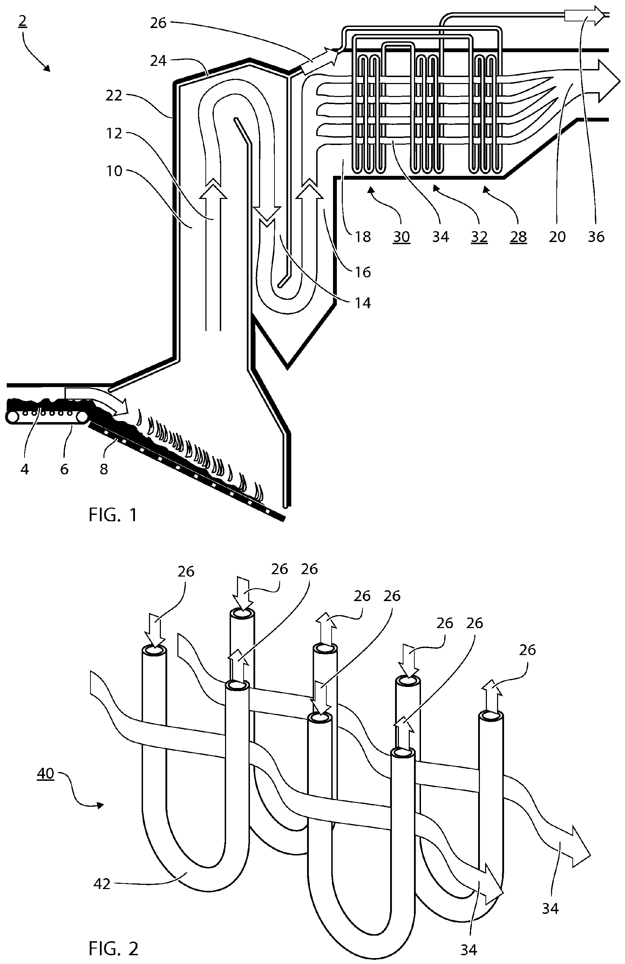

Fig. 1 shows a partial overview of a waste to energy incineration plant 2. Waste 4 to be incinerated is fed into the incineration plant by a conveyor 6 onto a grate 8 on which the waste 4 is burnt. Flue gas resulting from the incineration of the waste 4 on the grate 8 rises upwards as illustrated by arrow 12. The flue gas 12 may have a temperature of up to 1100°C to 1200°C and is then led through the first second and third radiation passes 10 14 and 16 to a horizontal convection pass 18 after which the flue gases are eventually led to a chimney and released to the atmosphere as indicated by arrow 20.

The walls 22 of the first second and third radiation passes 10 14 and 16 are provided with tubes 24 to which water is fed for generating steam. The steam is then, as indicated by arrow 26, in turn led through superheaters 28 30 and 32, each of which represents a heat exchanger, positioned in the horizontal convection pass 18. The superheaters 28 30 and 32 are heated by the flue gas 12 passing through the convection pass 18 as illustrated by arrow 34. The heat from the flue gas 34 steam 26 so that the steam 26 is converted into superheated steam 36 which is led to a steam turbine (not shown) or similar consumer of superheated steam.

Additionally (not shown) the superheater 28 may be preceded by an evaporator for producing further saturated steam, the evaporator being placed upstream of the superheater 30 in the path of the flue gases 12, and being similar in construction to the superheater 28.

The flue gas 34 heating the superheater 28 30 and 32 comprises inter alia corrosive compounds and particles of hot ash 38, not shown in fig. 1, which particles of hot ash 38 may themselves comprise corrosive compounds.

The temperature of the steam 26 increases as it is led through the superheaters 28 30 and 32. The lowest steam temperature of 250°C to 300°C is found in superheater 28 and the highest steam temperature is found in superheater 32. Thus the risk of corrosion is highest for superheater 32. In the incineration plant 2 all superheaters may be identical to the superheater 32, which superheater 32 is a heat exchanger according to the present invention. Alternatively, to save costs, only superheater 32 is a heat exchanger according to the present invention whereas superheaters 28 and 30 are superheaters consisting of conventional materials.

Each superheater 28 30 32 comprises a number of superheater tubes representing heat exchanger components.

Fig. 2 shows superheater tubes, one of which is designated the reference numeral 40, of the superheater 32 in Fig. 1. As seen in Fig. 2, steam 26 runs through the superheater tubes 40 while flue gas 34 passes between the superheater tubes 40 to heat the superheater tubes 40 and the steam 26 running within the superheater tubes 40. The superheater tubes 40 may be joined to each other by bends, one of which is designated the reference numeral 42, which may be formed separate from the superheater tubes 40 and joined thereto, or which alternatively may be formed integrally with the superheater tubes 40.

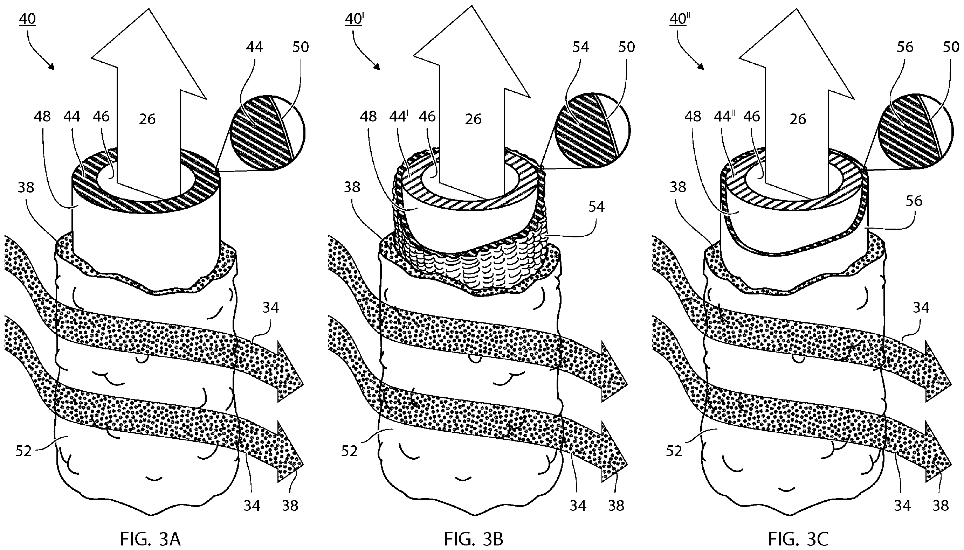

Fig. 3A shows a first embodiment of a superheater tube 40, representing a heat exchanger component, of the super heater 32, representing a first embodiment of the heat exchanger according to the first aspect of the present invention.

Superheater tube 40 comprises a main tube 44 including a wall having a first side 46 in contact with the steam 26 and a second side 48 facing the flue gas 34. The main tube 44 is made from a precursor material which upon oxidation forms a scale 50 comprising α-Al₂O₃ at least on the second side.

Flue gas 34 passes the superheater tube 40 and deposits particles of hot ash 38 on the main tube 44, thus forming a sticky deposit 52 upon the second side 48 of the single material tube 44. Corrosive compounds comprised by the flue gas 34 and/or the particles of hot ash 38 are thus present in the sticky coating 52. Corrosion of the main tube 44 is however prevented, or at least diminished, by the scale 50 covering the second side 48 of the main tube 44.

Fig. 3B shows a second embodiment of a superheater tube 40^{I}, representing a heat exchanger component, of a super heater 32^{I}, representing a second embodiment of the heat exchanger according to the first aspect of the present invention.

Superheater tube 40^{I} comprises a main tube 44^{I}, made from a material which does not form a scale comprising α-Al₂O₃ upon oxidation. Instead superheater tube 40^{I} comprises, on the second side 48 of the main tube 44^{I}, a welded cladding 54 of a precursor material which upon oxidation forms the scale 50 comprising α-Al₂O₃. The scale 50 on the welded cladding 54 prevents, or at least diminishes, corrosion of the main tube 44^{I} due to corrosive compounds comprised by the flue gas 34 and/or the particles of hot ash 38.

Fig. 3C shows a third embodiment not covered by the invention of a superheater tube 40", representing a heat exchanger component, of a super heater 32", representing a third embodiment of the heat exchanger according to the first aspect of the present invention.

Superheater tube 40" comprises an inner tube 44", representing a main tube, made from a material which does not form a scale comprising α-Al₂O₃ upon oxidation. Instead superheater tube 40" comprises, on the second side 48 of the main tube 44", an outer tube 56 made of a precursor material which upon oxidation forms the scale 50 comprising α-Al₂O₃. The scale 50 on the outer tube 56 prevents, or at least diminishes, corrosion of the inner tube 44" due to corrosive compounds comprised by the flue gas 34 and/or the particles of hot ash 38.

The superheater tube 40" may be manufactured by co-extruding the main tube 44" and the outer tube 56.

**List of parts with reference to the figures:**

| |
|---|
| 2. Incineration plant |
| 4. Waste |
| 6. Conveyor |
| 8. Grate |
| 10. First radiation pass |
| 12. Flue gas |
| 14. Second radiation pass |
| 16. Third radiation pass |
| 18. Horizontal convection pass |
| 20. Arrow indicating flue gases being led eventually to a chimney |
| 22. Walls of radiation passes |
| 24. Tubes |
| 26. Saturated steam |
| 28. Superheater |
| 30. Superheater |
| 32. Superheater |
| 34. Arrow indicating flue gas passing through convection pass |
| 36. Superheated steam |
| 38. Particles of hot ashes |
| 40. Superheater tube |
| 42. Bend |
| 44. Main tube |
| 46. First side |
| 48. Second side |
| 50. Scale |
| 52. Sticky deposit |
| 54. Welded cladding |
| 56. Outer tube |

## Claims

1. A waste to energy incineration plant (2) comprising a fluid (26) heating heat exchanger (32), said incineration plant (2) in operation producing a flue gas (34), said heat exchanger comprising at least one heat exchanger component (40) comprising a wall having a first side (46) in contact with said fluid (26), and a second side (48) in contact with said flue gas (34), said second side (48) being provided with a protective coating (50) for protecting said heat exchanger component (40) against corrosion caused by corrosive compounds entrained or comprised by said flue gas (34), **characterized in that** said protective oxide (50) comprises predominantly α-Al₂O₃, **in that** said protective oxide (50) is a scale (50) being up to 10 µm thick, and **in that** said heat exchanger component (40^{I}) comprises a base material (44^{I}) coated by a precursor material (54) forming said scale (50) upon oxidation.

2. The heat exchanger (32) according to claim 1, said fluid (26) being steam and said heat exchanger (32) being a superheater (32) for superheating said steam (26).

3. The heat exchanger (32) according to claim 1 or 2, said precursor material (54) being coated upon said base material (44^{I}) by welding.

4. The heat exchanger (32) according to claim 3, wherein the coating is from 1 mm to 20 mm thick.

5. The heat exchanger (32) according to any one of the preceding claims, said precursor material comprising an alloy comprising at least 4-5 wt.% aluminium.

6. The heat exchanger (32) according to any preceding claim, said incineration plant (2) in operation incinerating waste and said corrosive compounds comprising chlorine.

7. The heat exchanger (32) according to any preceding claim, said heat exchanger (32) comprising a plurality of said heat exchanger components (40).

8. The heat exchanger (32) according to any preceding claim, said heat exchanger component (40) being a tube.

9. A method of forming a scale (50) for protecting a heat exchanger component (40) of a heat exchanger (32) in a waste to energy incineration plant against corrosion caused by corrosive compounds entrained or comprised by a flue gas (34), said heat exchanger component (40) comprising a wall having a first side (46) in contact with a fluid (26) to be heated in said heat exchanger (32), and a second side (48) in contact with said flue gas (34), said method comprising the steps of:
providing a heat exchanger component (40^{I}) comprising a base material (44^{I}) coated by a precursor material (54) forming said scale (50) upon oxidation and being arranged for protecting the heat exchanger component after oxidation against said corrosion, said precursor material comprising aluminium,
oxidizing said heat exchanger component (40) at a temperature, atmosphere and for a time adapted to form said scale (50) on said precursor material, said scale (48) being an oxide layer and being up to 10 µm thick and comprising predominantly α-Al₂O₃.

10. The method of claim 9, said temperature being at least 950°C, more preferably 1100°C to 1200°C.

11. The method of any of the claims 9-10, said atmosphere comprising an Argon-Hydrogen mixture containing 2% water vapour.

12. The method of any of the claims 9-11, said time being at least 2 hours.

## Patentansprüche

1. Müllverbrennungsanlage (2) umfassend einen Wärmetauscher (32) mit Flüssigkeitserwärmung (26), wobei die in Betrieb befindliche Verbrennungsanlage (2) ein Abgas erzeugt (34), und wobei der besagte Wärmetauscher wenigstens einen Wärmetauscherteil (40) umfasst, der eine Wand mit einer ersten Seite (46), die mit der Flüssigkeit (26) in Kontakt ist, und einer zweiten Seite (48), die mit dem Abgas (34) in Kontakt ist, umfasst, wobei die zweite Seite (48) mit einer beschützenden Beschichtung (50) versehen ist zur Beschützung des Wärmetauscherteils (40) gegen Korrosion, die von korrodierenden, vom Abgas (34) mitgerissenen oder darin beinhalteten Stoffen veranlasst ist, **dadurch gekennzeichnet, dass** das beschützende Oxid (50) überwiegend α-Al₂O₃ umfasst, dass das beschützende Oxid (50) ein Zunder (50) ist, der bis zu 10 µm dick ist, und dass der Wärmetauscherteil (40^{I}) einen Grundwerkstoff (44^{I}) umfasst, der mit einem Vormaterial (54) beschichtet ist, das den Zunder (50) nach Oxidation bildet.

2. Wärmetauscher (32) nach Anspruch 1, wobei die Flüssigkeit (26) Dampf ist, und der Wärmetauscher (32) ein Überhitzer (32) zur Überhitzung des Dampfs (26) ist.

3. Wärmetauscher (32) nach Anspruch 1 oder 2, wobei das Vormaterial (54) mittels Schweissens auf den Grundwerkstoff (44^{I}) beschichtet wird.

4. Wärmetauscher (32) nach Anspruch 3, wobei die Beschichtung von 1 mm bis 20 mm dick ist.

5. Wärmetauscher (32) nach einem jeglichen der vorherstehenden Ansprüche, wobei das Vormaterial eine Legierung umfasst, die wenigstens 4-5 Gewichtsprozent Aluminium umfasst.

6. Wärmetauscher (32) nach einem jeglichen der vorherstehenden Ansprüche, wobei die in Betrieb befindliche Verbrennungsanlage (2) Müll verbrennt, und die korrodierende Stoffe Chlor umfassen.

7. Wärmetauscher (32) nach einem jeglichen der vorherstehenden Ansprüche, wobei der Wärmetauscher (32) eine Vielzahl der besagten Wärmetauscherteile (40) umfasst.

8. Wärmetauscher (32) nach einem jeglichen der vorherstehenden Ansprüche, wobei der Wärmetauscherteil (40) eine Röhre ist.

9. Verfahren zur Bildung eines Zunders (50) zur Beschützung eines Wärmetauscherteils (40) eines Wärmetauschers (32) in einer Müllverbrennungsanlage gegen Korrosion, die von korrodierenden, vom Abgas (34) mitgerissenen oder darin beinhalteten Stoffen veranlasst ist, wobei der Wärmetauscherteil (40) eine Wand mit einer ersten Seite (46), die mit einer in dem Wärmetauscher (32) zu erwärmenden Flüssigkeit (26) in Kontakt ist, und einer zweiten Seite (48), die mit dem Abgas (34) in Kontakt ist, umfasst, wobei das Verfahren folgende Schritte umfasst:
Bereitstellung von einem Wärmetauscherteil (40'), der einen Grundwerkstoff (44^{I}) umfasst, der mit einem Vormaterial (54) beschichtet ist, das den Zunder (50) nach Oxidation bildet und zum Schutz des Wärmetauscherteils gegen die besagte Korrosion nach Oxidation angeordnet ist, wobei das Vormaterial Aluminium umfasst,
Oxidieren von dem Wärmetauscherteil (40) bei einer Temperatur, Atmosphäre und für eine Zeit, die dafür angepasst sind, den besagten Zunder (50) auf dem Vormaterial zu bilden, wobei der Zunder (48) eine Oxidschicht ist und bis zu 10 µm dick ist und überwiegend α-Al₂O₃ umfasst.

10. Verfahren nach Anspruch 9, wobei die Temperatur wenigstens 950°C ist, mehr bevorzugt 1100°C bis 1200°C.

11. Verfahren nach einem jeglichen der Ansprüche 9-10, wobei die Atmosphäre eine Argon-Wasserstoff-Mischung umfasst, die 2% Wasserdampf enthält.

12. Verfahren nach einem jeglichen der Ansprüche 9-11, wobei die Zeit wenigstens 2 Stunden sind.

## Revendications

1. Installation d'incinération de déchets en énergie (2) comprenant un échangeur de chaleur (32) chauffant un fluide (26), ladite installation d'incinération (2) produisant, lorsqu'en activité, un gaz de combustion (34), ledit échangeur de chaleur comprenant au moins un composant (40) d'echangeur de chaleur comprenant une paroi ayant un premier côté (46) en contact avec ledit fluide (26), et un deuxième côté (48) en contact avec ledit gaz de combustion (34), ledit deuxième côté (48) étant fourni avec un revêtement protecteur (50) pour proteger ledit composant d'echangeur de chaleur (40) contre la corrosion provoquée par des composés corrosifs entraînés par ledit gaz de combustion (34), **caractérisée en ce que** ledit oxyde protecteur (50) comprend principalement du α-Al₂O₃, **en ce que** ledit oxyde protecteur (50) est une couche (50) étant jusqu'à 10 µm d'épaisseur, et **en ce que** ledit composant (40') d'échangeur de chaleur comprend un matériau de base (44') recouvert avec un matériau précurseur (54) créant ladite couche (50) lors de l'oxydation.

2. Echangeur de chaleur (32) selon la revendication 1, ledit fluide (26) étant de la vapeur et ledit échangeur de chaleur (32) étant un surchauffeur (32) pour surchauffer ladite vapeur (26).

3. Echangeur de chaleur (32) selon la renvedication 1 ou 2, ledit matériau précurseur (54) étant recouvert sur ledit matériau de base (44') par soudage.

4. Echangeur de chaleur (32) selon la renvedication 3, où le revêtement est d'une épaisseur de 1 mm à 20 mm.

5. Echangeur de chaleur (32) selon l'une quelconque des revendications précédentes, ledit matériau précurseur comprenant un alliage comprenant au moins de 4 à 5 % poids d'aluminium.

6. Echangeur de chaleur (32) selon l'une quelconque des revendications précédentes, ladite installation d'incinération (2) incinérant en activité des déchets et lesdits composés corrosifs comprenant du chlore.

7. Echangeur de chaleur (32) selon l'une quelconque des revendications précédentes, ledit échangeur de chaleur (32) comprenant une pluralité desdits composants (40) d'echangeur de chaleur.

8. Echangeur de chaleur (32) selon l'une quelconque des revendications précédentes, ledit composant (40) d'echangeur de chaleur étant un tuyau.

9. Procédé de création d'une couche (50) pour protéger un composant (40) d'echangeur de chaleur d'un échangeur de chaleur (32) dans une installation d'incinération de déchets en énergie contre la corrosion provoquée par des composés corrosifs entraînés ou compris d'un gaz de combustion (34), ledit composant (40) d'echangeur de chaleur comprenant une paroi ayant un premier côté (46) en contact avec un fluide (26) à être chauffé dans ledit échangeur de chaleur (32), et un deuxième côté (48) en contact avec ledit gaz de combustion (34), ledit procédé comprenant les étapes de:
fournir un composant (40') d'echangeur de chaleur comprenant un matériau de base (44') recouvert avec un matériau précurseur (54) créant ladite couche (50) lors de l'oxydation et étant agencé pour protéger ledit composant d'echangeur de chaleur après oxydation contre ladite corrosion, ledit matériau précurseur comprenant de l'aluminium,
oxyder ledit composant (40) d'échangeur de chaleur à une température et une atmosphère et pendant une durée adaptée pour créer ladite couche (50) sur ledit matériau précurseur, ladite couche (48) étant une couche d'oxyde et étant jusqu'à 10 µm d'épaisseur et comprenant principalement du α-Al₂O₃.

10. Procédé selon la revendication 9, ladite température étant au moins 950°C, plus préférablement de 1100°C à 1200°C.

11. Procédé selon l'une quelconque des revendications 9 à 10, ladite atmosphère comprenant un mélange d'argon-hydrogène contenant 2% de vapeur d'eau.

12. Procédé selon l'une quelconque des revendications 9 à 11, ladite durée étant d'au moins 2 heures.
